# EUROPÄISCHE PATENTSCHRIFT

(11) **EP 0 919 081 B1**
(45) Veröffentlichungstag und Bekanntmachung des Hinweises auf die Patenterteilung: **07.05.2003**
(21) Anmeldenummer: 98938608.1
(22) Anmeldetag: 06.06.1998
(51) Int. Cl.: H02M 7/539, H02M 7/525

(54) **WECHSELRICHTER FÜR DIE EINSPEISUNG SINUSFÖRMIGER STRÖME IN EIN WECHSELSTROMNETZ**
INVERTER FOR INPUTTING SINUSOIDAL CURRENTS INTO AN ALTERNATING CURRENT NETWORK
ONDULEUR POUR L'INJECTION DE COURANTS SINUSOIDAUX DANS UN RESEAU ALTERNATIF

(30) Priorität: 17.06.1997 DE 19725629
(43) Veröffentlichungstag der Anmeldung: 02.06.1999
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: EP9803401
(87) Internationale Veröffentlichungsnummer: WO98058441

(56) Entgegenhaltungen:
- EP-A2- 0 462 547
- WO-A1-90/07820

## Beschreibung

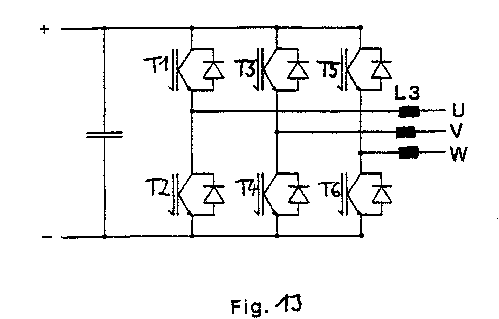

Die Erfindung betrifft einen Wechselrichter für die Einspeisung sinusförmiger Ströme in ein Wechselstromnetz bzw. ein öffentliches Stromversorgungsnetz. Bei solchen Wechselrichtern werden fast ausschließlich Leistungsschalter in der Konfiguration einer Drehstrombrücke - wie in Fig. 13 gezeigt - ausgeführt.

Ein solcher Wechselrichter ist aus GB-A 1,108,571 bekannt Ein solcher Wechselrichter erzeugt aus einer Gleichstrom/Spannungsquelle einen Mehrphasenwechselstrom mit den Phasen U, V und W. Durch die in Fig. 13 gezeigte Antiparallelschaltung der Leistungsschalter T1 bis T6 mit entsprechenden Dioden ist ein Vierquadrantenbetrieb möglich und somit ist eine solche Wechselrichterschaltung sehr vielseitig einsetzbar.

Ferner ist aus EP 0 599 334 A2 und DE 38 19 097 A1 jeweils eine Schaltungsanordnung zum Speisen eines Reluktanzmotors bekannt, wobei eine Gleichspannungsquelle mit je einer asymmetrischen H-Schaltung für jede Wicklung des Motors beschrieben wird. Die H-Schaltung weist jeweils ein Schaltelement und einen dazu in Reihe angeordnetes, in bezug auf die Gleichspannungsquelte in Sperrrichtung gepoltes Gleichrichterelement auf und bildet mithin somit eine Wechselrichterschaltung.

Nachteilig ist bei einer Wechselrichterschaltung - wie sie in Fig. 13 gezeigt ist -, dass im Falle eines Querkurzschlusses von zwei Schaltern, z.B. T1 und T2, sich extrem große Energieflüsse einstellen, was regelmäßig zur völligen Zerstörung des Wechselrichters und möglicherweise zum Ausbruch eines Brandes und somit zur Zerstörung aller angeschlossenen Anlagenteile führt.

Es ist Aufgabe der vorliegenden Erfindung, die Kurzschlussfestigkeit zu verbessern und die Kurzschlussgefahr zu verringern.

Die Aufgabe wird erfindungsgemäß mit einem Wechselrichter mit den Merkmalen nach Anspruch 1 gelöst. Vorteilhafte Weiterbildungen sind in den Unteransprüchen beschrieben.

Der Erfindung liegt die Erkenntnis zugrunde, für die Erzeugung einer Halbschwingung einer Sinusschwingung nur eine einzige Schaltungseinheit zu verwenden. Für die Erzeugung einer positiven Halbschwingung einer Sinusschwingung wird somit eine andere Schaltungseinheit verwendet als für die Erzeugung des negativen Teils des Sinusstromes. Dies hat zur Folge, dass während der Erzeugung einer positiven Halbschwingung nur ein Schalter einer Schaltungseinheit getaktet bzw. betätigt wird und während der Erzeugung der negativen Halbschwingung eines Sinusstromes ein anderer Schalter. Die Gefahr eines Kurzschlusses zwischen beiden Schaltern wird somit auf die Zeit während des Wechsels von der positiven zur negativen bzw. von der negativen zur positiven Halbschwingung reduziert.

Ferner ist für die Erzeugung einer Halbschwingung einer Sinusschwingung nur noch eine einzige Schaltungseinheit verantwortlich, so dass die Schaltungseinheiten, welche für unterschiedliche Halbschwingungen verantwortlich zeichnen, auch räumlich voneinander entfernt angeordnet werden können. Hierdurch wird die Sicherheit der Schaltungsanlagenteile verbessert und auch die räumliche Unterbringung erheblich vereinfacht.

Eine besonders bevorzugte Ausführungsform der Erfindung zeichnet sich dadurch aus, dass die eingespeiste Gleichspannung in eine erste Teilgleichspannung und eine zweite Teilgleichspannung aufgeteilt wird. Hierbei wird beispielsweise die erste Teilgleichspannung zur Erzeugung des positiven Teils des Netzstromes und die zweite Teilgleichspannung zur Erzeugung des negativen Teils des Netzstromes verwendet. Z.B. belaufen sich die beiden Teilgleichspannungen betragsmäßig auf jeweils 660 V, wobei die gesamte Gleichspannung dann 1320 V beträgt. Die in der ersten Schaltungseinheit verwendeten Bauteile müssen dann lediglich die erste Teilgleichspannung verarbeiten können, während die Bauteile der zweiten Schaltungseinheit maximal nur mit der zweiten Teilgleichspannung beaufschlagt werden. Auch für die Induktivitäten und evtl. vorhandene Halbleiterschaltelemente, die den Schaltungseinheiten nachgeschaltet sind, gilt entsprechendes. Da demzufolge diese Bauteile nicht so durchschlagfest ausgelegt sein müssen wie im Falle des bekannten, in Fig. 13 dargestellten Wechselrichters, lassen sich beträchtliche Kosten einsparen. In anderen Worten resultiert eine doppelte Ausgangsleistung des gesamten Wechselrichters bei Einsatz von Bauteilen, die nur jeweils eine Teilgleichspannung verarbeiten müssen.

Die Erfindung ist nachfolgend anhand eines zeichnerisch dargestellten Ausführungsbeispieles näher erläutert. In der Zeichnung stellen dar:
- Fig. 1: Grundprinzip-Schaltbild einer Schaltungseinheit zur Erzeugung des positiven Teils des Netzstromes;
- Fig. 2: Grundprinzip-Schaltbild einer Schaltungseinheit zur Erzeugung des negativen Teils des Netzstromes;
- Fig. 3: Grundprinzip-Schaltbild zur Erzeugung des Stromes einer Phase mit Hilfe der Schaltungen gemäß der Fig. 1 und 2;
- Fig. 4: Grundprinzip-Schaltbild einer Zusammenschaltung von mehreren Schaltungseinheiten gemäß der Fig. 1 und 2 zur Erzeugung des Stromes der drei Phasen U, V und W;
- Fig. 5: Stromverlauf- und Zeitschaltdiagramm zur Ansteuerung der Schalter T1 und T2 der ersten und zweiten Schaltungseinheit;
- Fig. 6: erweitertes Grundprinzip-Schaltbild zur Erzeugung des Stromes einer Phase;
- Fig. 7: Grundprinzip-Schaltbild einer Schaltungseinheit zur Erzeugung des positiven Teils des Netzstromes mit zusätzlich zwischengeschaltetem Thyristor;
- Fig. 8: Grundprinzip-Schaltbild einer Schaltungseinheit zur Erzeugung des positiven Teils des Netzstromes mit zusätzlich zwischengeschaltetem Thyristor;
- Fig. 9: Grundprinzip-Schaltbild zur Erzeugung des Stromes einer Phase mit Hilfe der Schaltungen gemäß der Fig. 7 und 8;
- Fig. 10: Stromverlauf- und Zeitschaltdiagramm zur Ansteuerung der Schalter T1, S1, T2 und S2 der Schaltung gemäß der Fig. 9;
- Fig. 11: Grundprinzip-Schaltbild einer ersten Ausführungsform einer Zusammenschaltung von mehreren Schaltungseinheiten gemäß der Fig. 7 und 8 zur Erzeugung des Stromes der drei Phasen U, V und W;
- Fig. 12: eine Grundprinzip-Schaltbild einer zweiten Ausführungsform einer Zusammenschaltung von mehreren Schaltungseinheiten gemäß der Fig. 7 und 8 zur Erzeugung des Stromes der drei Phasen U, V und W; und
- Fig. 13: Grundprinzip-Schaltbild eines bekannten Wechselrichters.

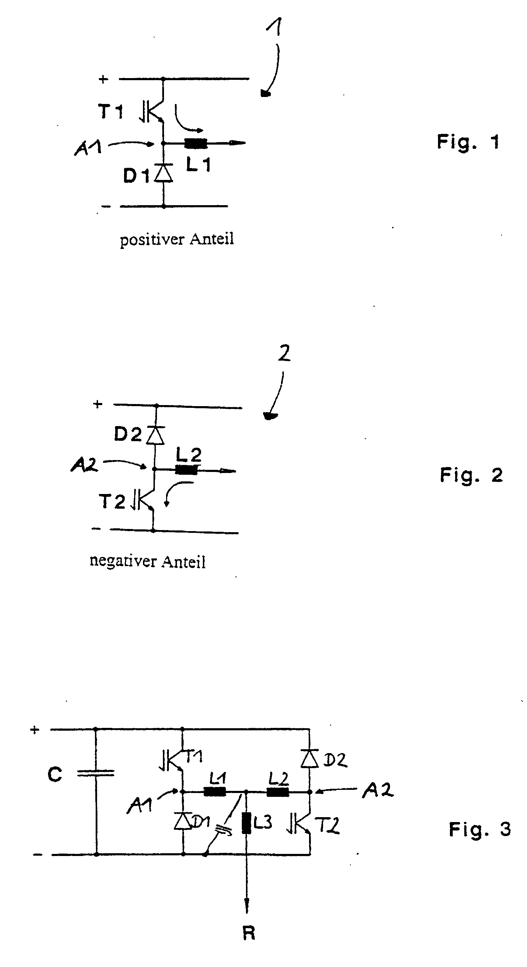

Fig. 1 zeigt ein Schaltbild eines Querzweiges bzw. einer Schaltungseinheit 1 zur Erzeugung des positiven Anteils des Wechsel- bzw. Drehstromnetzstromes aus einer Gleichspannung. Die Schaltungseinheit besteht aus einem Leistungsschalter T1, z.B. einem IGBT (isolated gate bipolar transistor) oder GTO (gate turn off), und einer Diode D1, welche in Reihe an die Gleichspannungsanschlüsse gelegt sind. Zwischen dem Schalter T1 und der Diode D1 liegt ein Stromabgriff A1, an welchen mittels einer Induktivität L1 der Strom abgegriffen wird.

Fig. 2 zeigt im Grundprinzip ein Schaltbild einer Schaltungseinheit 2 zur Erzeugung des negativen Teils des Wechsel- bzw. Drehstromnetzstromes mit einem in Reihe geschalteten Leistungstransistor T2, einer Diode D2 und einem dazwischenbefindlichen Stromabgriff A2 und einer nachgeschalteten Induktivität L2.

Fig. 3 zeigt die parallele Verschaltung der in Fig. 1 und Fig. 2 beschriebenen Schaltungseinheiten 1, 2 mittels einer weiteren Induktivität L3 als Verkopplungsinduktivität. Parallel zur Zusammenschaltung der Schaltungseinheiten 1, 2 liegt ein Kondensator C am Gleichspannungsnetz.

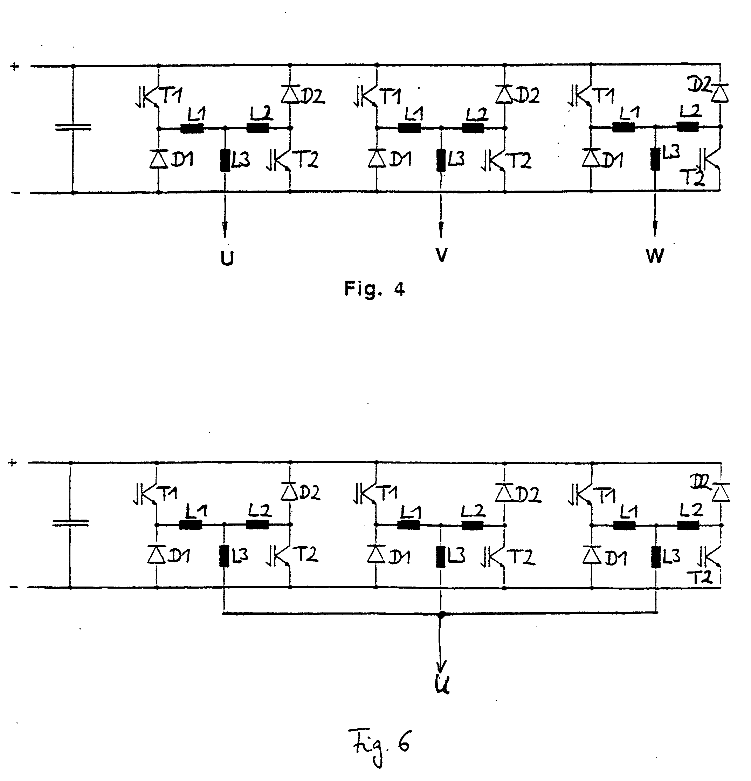

Zur Erzeugung eines Drehstromnetzstromes mit den Phasen U, V und W werden - wie in Fig. 4 gezeigt - jeweils drei erste und drei zweite Schaltungseinheiten - wie in Fig. 3 gezeigt - miteinander verschaltet.

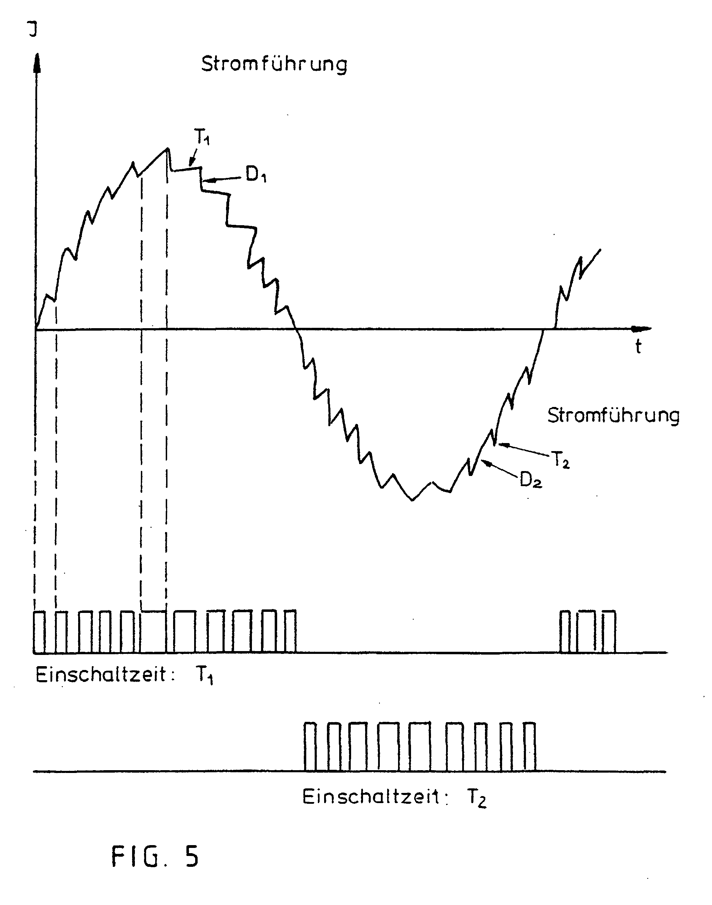

Fig. 5 zeigt im Zeitdiagramm, wie die Schalter T1 und T2 geschaltet werden, um beispielsweise für die Phase U einen Sinusstrom zu erhalten. Während der positiven Halbwelle des Sinusstromes wird nur der Schalter T1 in einem vorgeschriebenen Taktverlauf an- und ausgeschaltet, während dieser Phase ist der Schalter T2 ausgeschaltet. Durch eine Taktung der An- und Ausschaltzustände des Schalters T1 wird ein "gezackter" Sinusstrom erzeugt. Während der Erzeugung der negativen Halbwelle des Sinusstromes ist der Schalter T1 ausgeschaltet und nur der Schalter T2 wird in vorbestimmten Zeit- und Taktabständen an- und ausgeschaltet, so daß die negative Halbwelle des Sinusstromes generiert wird. Der "zackige" Stromverlauf, wie in Fig. 5 dargestellt, ergibt sich durch die Stromführung und Wechselwirkung des Transistors T1 und der Diode D1 bzw. des Transistors T2 und D2 zueinander. Im Bereich des Strommaximums einer Sinuswelle ist der Schalter T1 - bei der positiven Halbwelle - bzw. der Schalter T2 - bei der negativen Halbwelle - für längere Zeit eingeschaltet als im Bereich niedrigerer Strompegel.

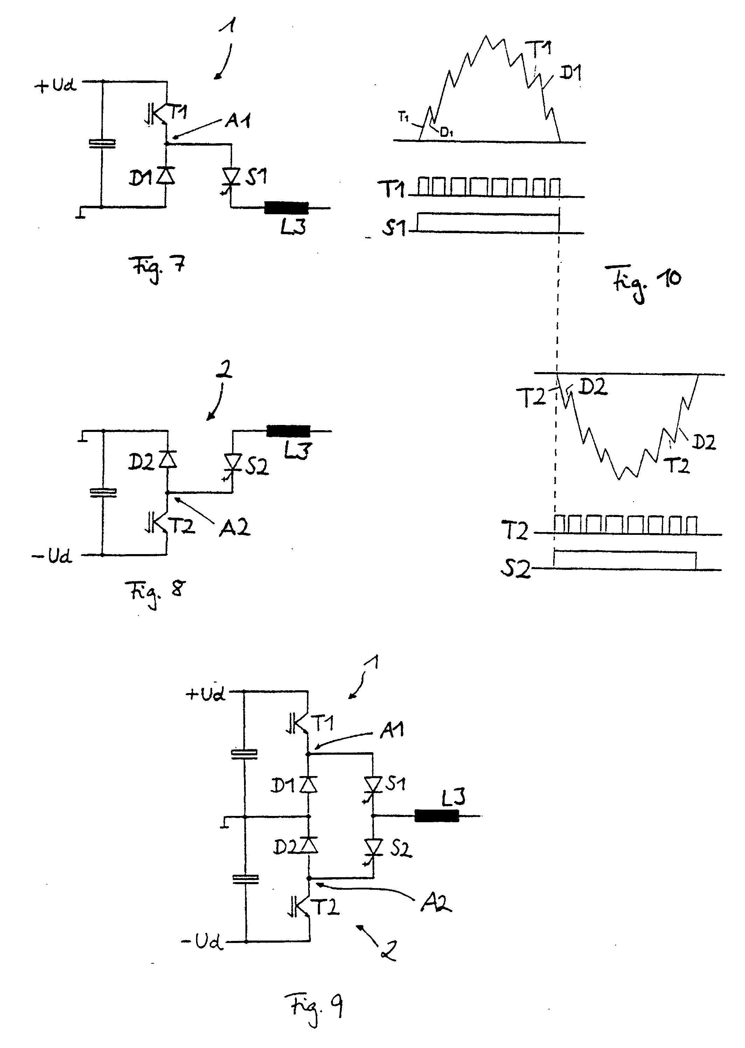

Fig. 6 zeigt die Zusammenschaltung von jeweils drei ersten und drei zweiten Schaltungseinheiten zu einer einzigen Schaltungseinheit für die Phase U. Durch eine solche Zusammenschaltung und durch ein zeitlich verschobenes Ein- und Ausschalten der jeweiligen Leistungsschalter T1 und T2 der einzelnen Schaltungseinheiten können Stromüberschwingungen drastisch reduziert werden, während die einzelnen Schaltungseinheiten bzw. Schaltungsmodule über die Induktivität L3 parallel geschaltet sind.

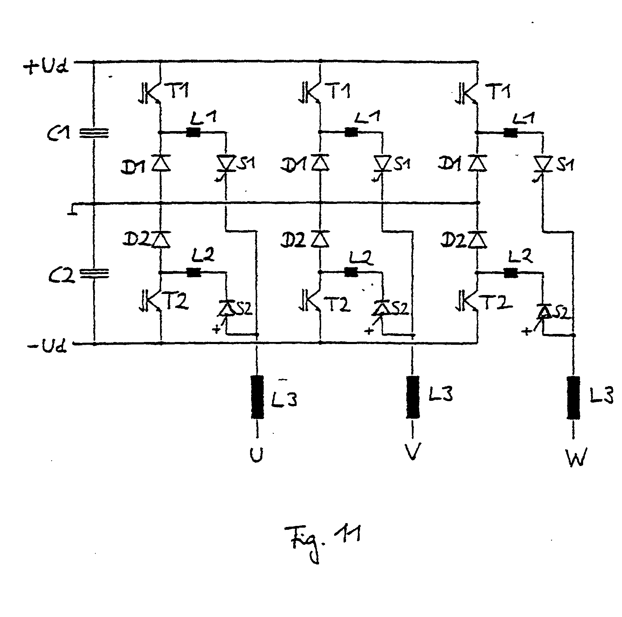

Bei der Schaltung gemäß Fig. 7 ist zwischen dem Stromabgriff A1 der ersten Schaltungseinheit 1 der Fig. 7 zur Erzeugung des positiven Anteils des Netzstromes und der nachgeschalteten Induktivität L3 ein als Thyristor ausgebildetes erstes Schaltelement S1 geschaltet. In gleicher Weise ist ein zweites Schaltelement S2 zwischen dem Stromabgriff A2 der zweiten Schaltungseinheit 2 der Fig. 8 zur Erzeugung des negativen Anteils des Netzstromes und der Induktivität L3 vorgesehen.

Fig. 9 zeigt die serielle Verschaltung der in den Fig. 7 und 8 dargestellten Schaltungseinheiten 1, 2, wobei die Induktivität L3 als gemeinsame Verkopplungsinduktivität dient. Die eingespeiste Gleichspannung ist bei dieser Zusammenschaltung der Schaltungseinheiten 1, 2 in zwei betragsmäßig gleich große Teilgleichspannungen + Ud, -Ud aufgeteilt. Die beiden Blinddioden D1, D2 sind an Masse angeschlossen.

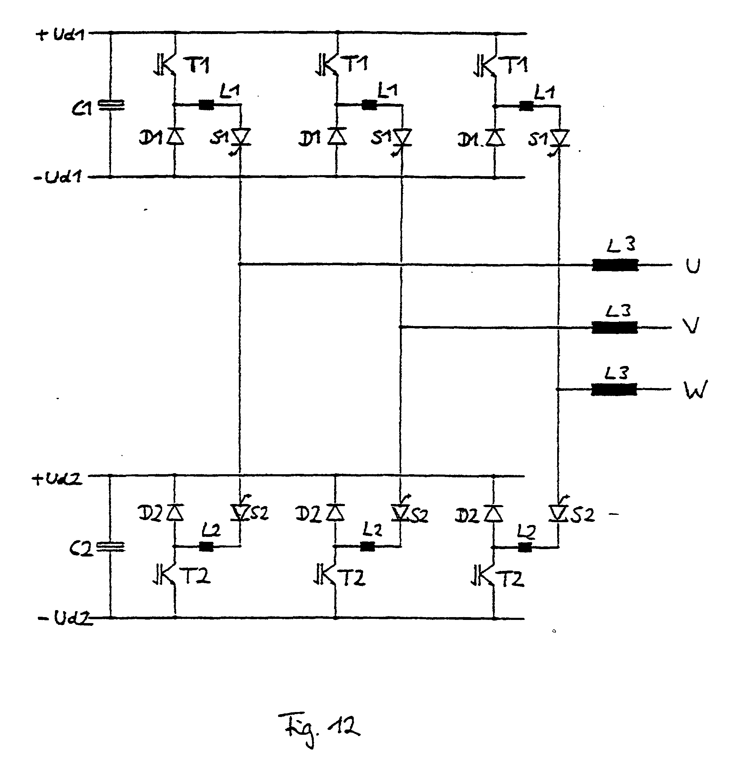

Das Zeitdiagramm der Fig. 10 verdeutlicht, wie die Schalter T1 und T2 sowie die Schaltelemente S 1 und S2 geschaltet werden, um für eine Phase einen Sinusstrom zu erhalten. Während der positiven Halbwelle des Sinusstromes wird der Schalter T1 in einem vorgeschriebenen Taktverlauf an- und ausgeschaltet, während das Schaltelement S 1 während der gesamten positiven Halbwelle angeschaltet ist. Der Schalter T2 und das Schaltelement S2 sind während dieser Zeit ausgeschaltet. Ähnlich dem in Fig. 5 dargestellten Zeitverlauf wird durch Taktung der An- und Ausschaltzustände des Schalters T1 ein "gezackter" Sinusstrom erzeugt. Während der Erzeugung der negativen Halbwelle des Sinusstromes hingegen sind die Schalter T1 und S1 ausgeschaltet und der Schalter T2 wird in vorbestimmten Zeit- und Taktabständen an- und ausgeschaltet, so daß die negative Halbwelle des Sinusstromes generiert wird. Das Schaltelement S2 ist hierbei während der gesamten negativen Halbwolle angeschaltet.

Bei der in Fig. 11 dargestellten Schaltung wird ein Drehstromnetzstrom mit den Phasen U, V und W erzeugt, indem jeweils drei erste und drei zweite Schaltungseinheiten - wie in Fig. 9 gezeigt - miteinander verschaltet sind. Bei dieser Ausführungsform ist zwischen jedem Stromabgriff A1 bzw. A2 und dem jeweils nachfolgenden Schaltelement T1 bzw. T2 eine weitere Induktivität L1 bzw. L2 geschaltet.

Bei der Schaltung der Fig. 12 zur Erzeugung eines dreiphasigem Drehnetzstromes der Phasen U, V, W ist die eingespeiste Gleichspannung in zwei Teilgleichspannungen ±Ud1 und ± Ud2 aufgeteilt, welche in der Summe die Gesamtgleichspannung Ud ergeben. Die jeweiligen Dioden D1 bzw. D2 sind hierbei - wie in Fig. 12 gezeigt - nicht an Masse angeschlossen, sondern an -Ud1 bzw. +Ud2.

Fig. 13 zeigt das Schaltbild eines bekannten Wechselrichters, welcher durch die Antiparallelschaltung der Leistungsschalter T1- T6 mit der Diode D1 - D6 zwar einen Vierquadrantenbetrieb ermöglicht und somit als Schaltung sehr vielseitig einsetzbar ist, im Falle eines Querkurzschlusses von zwei Schaltern, z.B. T1 und T2, jedoch auch das sehr hohe Risiko eines sehr harten Kurzschlusses aufweist, welcher zur vollständigen Zerstörung des Wechselrichters und möglicherweise durch einen Brandausbruch zur vollständigen Zerstörung aller anliegenden Anlagenteile führen kann. Zur Erzeugung der positiven Halbwelle des Ausgangssinusstromes wird bei dem bekannten Wechselrichter eine aufeinanderfolgende Einund Ausschaltung beispielsweise der Schalter T1 und T2 vorgenommen. Für eine Halbwelle bedeutet dies, daß mehrmals während der Halbwelle aufeinanderfolgend T1 und T2 an- bzw. ausgeschaltet werden, was schon statistisch die Wahrscheinlichkeit eines Querkurzschlusses deutlich gegenüber der erfindungsgemäßen Lösung gemäß Fig. 5 erhöht.

Durch die getrennten erfindungsgemäßen Stromzweige, d.h. positiver und negativer Querzweig - siehe Fig. 1 und Fig. 2 -, werden bei der Zusammenschaltung der einzelnen Schaltungeinheiten - siehe beispielsweise Fig. 3 - harte Kurzschlüsse verhindert. Sollte es dennoch zu Fehlschaltungen der Schalter T1 und T2 bei den Ausführungsformen gemäß der Fig. 3, 4 und 6 kommen, so sind diese über die Induktivitäten L1 und L2 gegeneinander entkoppelt und geschützt. Bei den Ausführungsformen gemäß der Fig. 9, 11 und 12 reduzieren die Dioden D1 und D2 sowie die Schalter S1 und S2 die Gefahr eines Querkurzschlusses.

Der räumliche Aufbau der beiden Querzweige - positiv, negativ - kann ebenfalls getrennt werden, wodurch sich der mechanische Aufbau des Wechselrichters einfacher durchführen läßt. Mit dem Wechselrichterkonzept gemäß der Fig. 3 bzw. den Fig. 4 und 6 sowie gemäß der Fig. 9 bzw. der Fig. 11 und 12 lassen sich Wechselrichter mit sehr hoher Leistung aufbauen.

Die Entkopplungsdrosseln L1 und L2 zwischen den Schaltern von zwei zusammengeschalteten Schaltungseinheiten können gleichzeitig als Hochfrequenzdrossel und auch als Filter für eine dU/dt-Reduzierung genutzt werden. Damit ist eine Störstrahlung bereits direkt nach den Leistungsschaltern T1 und T2 drastisch reduziert.

## Patentansprüche

1. Wechselrichter mit Gleichspannungszwischenkreis und einer oder mehreren Phasen für die Einspeisung sinusförmiger Ströme in ein- Wechselstromversorgungsnetz mit
a) zwei Schaltungseinheiten (1, 2), von denen die erste Schaltungseinheit (1) den positiven Teil des Netzstromes und die zweite Schaltungseinheit den negativen Teil des Netzstroms erzeugt;
b) jede Schaltungseinheit (1, 2) weist einen Schalter (T1, T2) und eine damit in Reihe geschaltete Diode (D1, D2) auf, die an dem Gleichspannungszwischenkreis angeschlossen ist und ein Stromabgriff liegt zwischen dem Schalter und der Diode (D);
c) beide Schaltungseinheiten (1, 2) sind mittels wenigstens einer Induktivität (L1, L2), die im Stromabgriffszweig zwischen den Stromabgriffen angeordnet ist, gegeneinander entkoppelt;
d) während der Erzeugung des positiven Teils des Netzstromes schaltet der Schalter (T) der ersten Schaltungseinheit, während der Erzeugung des negativen Teils des Netzstromes schaltet der Schalter (T) der zweiten Schaltungseinheit, wobei ein gleichzeitiges Schalten der Schalter (T) der ersten Schaltungseinheit und der zweiten Schaltungseinheit vermieden wird und im Bereich der Strommaxima bzw. -minima einer Sinushalbwelle die Einschalttakte des jeweils betroffenen Schalters (T1, T2) der ersten und zweiten Schaltungseinheit länger sind als im Bereich des Nulldurchgangs einer Sinushalbwelle.

2. Wechselrichter nach Anspruch 1,
**dadurch gekennzeichnet, dass** beide Schaltungseinheiten (1, 2) mittels wenigstens einer weiteren gemeinsamen Induktivität verkoppelt sind.

3. Wechselrichter nach Anspruch 1 oder 2,
**dadurch gekennzeichnet, dass** ein erstes (zweites) Schaltelement (S1, S2), vorzugsweise ein Thyristor, zwischen dem Stromabgriffpunkt (A1, A2) der ersten (zweiten) Schaltungseinheit (1, 2) und einer gemeinsamen, die beiden Schaltungseinheiten (1, 2) verkoppelnden Induktivität (L3) geschaltet ist.

4. Wechselrichter nach Anspruch 3,
**dadurch gekennzeichnet, dass** während der Erzeugung des positiven Teils des Netzstromes das erste Schaltelement (S1) angeschaltet und das zweite Schaltelement (S2) ausgeschaltet ist, und dass während der Erzeugung des negativen Teils des Netzstromes das zweite Schaltelement (S2) angeschaltet und das erste Schaltelement (S1) ausgeschaltet ist.

5. Wechselrichter nach einem der vorhergehenden Ansprüche,
**dadurch gekennzeichnet, dass** die Gleichspannung (±Ud) in eine erste Teilgleichspannung (±Ud1; +Ud/2) und eine zweite Teilgleichspannung (±UD2; -Ud/2) aufgeteilt ist, dass die erste Teilgleichspannung (±Ud1; Ud/2) an der ersten Schaltungseinheit (1) zur Erzeugung des positiven Teils des Netzstromes und die zweite Teilgleichspannung (±Ud2; -Ud/2) an der zweiten Schaltungseinheit (2) zur Erzeugung des negativen Teils des Netzstromes abfällt und dass die zweite Schaltungseinheit (2) in Reihe mit der ersten Schaltungseinheit (1) geschaltet ist.

6. Wechselrichter nach Anspruch 5,
**dadurch gekennzeichnet, dass** die beiden Teilgleichspannungen (±Ud/2) betragsmäßig gleich groß und die beiden Dioden (D1, D2) an Masse angeschlossen sind.

7. Wechselrichter nach einem der vorhergehenden Ansprüche,
**dadurch gekennzeichnet, dass** zur Erzeugung eines Dreiphasenstromes wenigstens drei erste und drei zweite Schaltungseinheiten (1, 2), welche jeweils miteinander verschaltet sind, vorgesehen sind.

8. Wechselrichter nach einem der vorhergehenden Ansprüche,
**dadurch gekennzeichnet, dass** die ersten und zweiten Schalteinheiten (1, 2) räumlich voneinander getrennt aufgebaut sind.

9. Wechselrichter nach einem der vorhergehenden Ansprüche,
**dadurch gekennzeichnet, dass** zur Erzeugung einer Halbschwingung einer Sinusschwingung jeweils nur ein Schalter (T1, T2) einer Schaltungseinheit (1, 2) mehrfach an- und ausgeschaltet wird.

10. Wechselrichter nach Anspruch 9,
**dadurch gekennzeichnet, dass** zur Erzeugung der positiven Halbschwingung nur die erste Schaltungseinheit (1) und zur Erzeugung der negativen Halbschwingung nur die zweite Schaltungseinheit (2) in bestimmten Zeitabständen mehrfach anund ausgeschaltet wird.

11. Wechselrichter nach einem der vorhergehenden Ansprüche,
**dadurch gekennzeichnet, dass** mehrere erste und zweite Schaltungseinheiten (1, 2) miteinander verbunden sind und den Strom einer einzigen Phase (U, V, W) bereitstellen.

12. Windenergiekonverter oder anderes elektrischen Gleichstrom bereitstellendes Elektrizitätswerk mit einem Wechselrichter nach einem der vorhergehenden Ansprüche.

## Claims

1. Invertor with DC voltage intermediate circuit and one or more phases for feeding sinusoidal currents into an AC supply mains, having:
a) two circuit units (1, 2), of which the first circuit unit (1) generates the positive part of the mains current and the second circuit unit generates the negative part of the mains current;
b) each circuit unit (1, 2) has a switch (T1, T2) and a diode (D1, D2) connected in series therewith, which diode is connected to the DC voltage intermediate circuit, and a current tap is located between the switch and the diode (D);
c) the two circuit units (1, 2) are decoupled from one another by means of at least one inductance (L1, L2), which is arranged in the current tap branch between the current taps;
d) the switch (T) of the first circuit unit switches during the generation of the positive part of the mains current, while the switch (T) of the second circuit unit switches during the generation of the negative part of the mains current, a simultaneous switching of the switches (T) of the first circuit unit and of the second circuit unit being avoided and the switch-on clock cycles of the respectively affected switch (T1, T2) of the first and second circuit units being longer in the region of the current maxima or minima of a sine half-wave than in the region of the zero crossing of a sine half-wave.

2. Invertor according to Claim 1,
**characterized in that** the two circuit units (1, 2) are coupled by means of at least one further common inductance.

3. Invertor according to Claim 1 or 2,
**characterized in that** a first (second) switching element (S1, S2), preferably a thyristor, is connected between the current tap point (A1, A2) of the first (second) circuit unit (1, 2) and a common inductance (L3) that couples the two circuit units (1, 2).

4. Invertor according to Claim 3,
**characterized in that** the first switching element (S1) is switched on and the second switching element (S2) is switched off during the generation of the positive part of the mains current, and **in that** the second switching element (S2) is switched on and the first switching element (S1) is switched off during the generation of the negative part of the mains current.

5. Invertor according to one of the preceding claims,
**characterized in that** the DC voltage (±Ud) is divided into a first partial DC voltage (±Ud1; +Ud/2) and a second partial DC voltage (±UD2; -Ud/2), **in that** the first partial DC voltage (±Ud1; Ud/2) is dropped across the first circuit unit (1) for generating the positive part of the mains current and the second partial DC voltage (±Ud2; -Ud/2) is dropped across the second circuit unit (2) for generating the negative part of the mains current, and **in that** the second circuit unit (2) is connected in series with the first circuit unit (1).

6. Invertor according to Claim 5,
**characterized in that** the two partial DC voltages (±Ud/2) have identical magnitudes and the two diodes (D1, D2) are connected to earth.

7. Invertor according to one of the preceding claims,
**characterized in that**, in order to generate a three-phase current, provision is made of at least three first and three second circuit units (1, 2) which are in each case connected up to one another.

8. Invertor according to one of the preceding claims,
**characterized in that** the first and second circuit units (1, 2) are constructed such that they are spatially separate from one another.

9. Invertor according to one of the preceding claims,
**characterized in that** for the generation of a half-oscillation of a sinusoidal oscillation in each case only one switch (T1, T2) of a circuit unit (1, 2) is repeatedly switched on and off.

10. Invertor according to Claim 9,
**characterized in that** for the generation of the positive half-oscillation only the first circuit unit (1), and for the generation of the negative half-oscillation only the second circuit unit (2) is repeatedly switched on and off at specific time intervals.

11. Invertor according to one of the preceding claims,
**characterized in that** a plurality of first and second circuit units (1, 2) are connected to one another and provide the current of a single phase (U, V, W).

12. Wind energy converter or other power station providing electrical DC current, having an invertor according to one of the preceding claims.

## Revendications

1. Onduleur avec circuit intermédiaire à tension continue et une ou plusieurs phases pour l'alimentation de courants sinusoïdaux dans un réseau d'alimentation de courant alternatif avec :
a) deux unités de circuit (1,2) dont la première unité de circuit (1) génère la partie positive du courant de secteur et la seconde unité de circuit génère la partie négative du courant de secteur;
b) chaque unité de circuit (1,2) comporte un commutateur (T1, T2) et une diode (D1, D2) montée dessus en série, qui est raccordée au circuit intermédiaire à tension continue, et une prise de courant est disposée entre le commutateur et la diode (D);
c) les deux unités de circuit (1,2) sont découplées l'une de l'autre à l'aide d'au moins une résistance inductive (L1, L2) qui est disposée entre les prises de courant;
d) pendant la génération de la partie positive du courant de secteur, le commutateur (T) de la première unité de circuit est commuté alors que, pendant la génération de la partie négative du courant de secteur, le commutateur (T) de la seconde unité de circuit est commuté, de telle manière que l'on évite une commutation simultanée des commutateurs (T) de la première unité de circuit et de la seconde unité de circuit et que, dans la zone des maxima ou des minima de courant d'une demi-sinusoïde, les cycles de démarrage du commutateur concerné (T1, T2) de la première et de la seconde unité de circuit sont plus longs que dans la zone du passage par zéro d'une demi-sinusoïde.

2. Onduleur selon la revendication 1,
**caractérisé en ce que** les deux unités de circuit (1,2) sont couplées à l'aide d'au moins une autre résistance inductive commune.

3. Onduleur selon la revendication 1 ou 2,
**caractérisé en ce qu'**un premier (second) élément de circuit (S1,S2), de préférence un thyristor, est monté entre le point de prise de courant (A1,A2) de la première (seconde) unité de circuit (1,2) et une résistance inductive commune (L3) couplant les deux unités de circuit (1,2).

4. Onduleur selon la revendication 3,
**caractérisé en ce que**, pendant la génération de la partie positive du courant- de secteur, le premier élément de circuit (S1) est mis en circuit et le second élément de circuit (S2) est mis hors circuit et **en ce que**, pendant la génération de la partie négative du courant de secteur, le second élément de circuit (S2) est mis en circuit et le premier élément de circuit (S1) est mis hors circuit.

5. Onduleur selon l'une quelconque des revendications précédentes,
**caractérisé en ce que** la tension continue (±Ud) est divisée en une première tension continue partielle (±Ud1;+Ud/2) et une seconde tension continue partielle (±Ud2;-Ud/2), **en ce que** la première tension continue partielle (±Ud1;+Ud/2) retombe à la première unité de circuit (1) pour générer la partie positive du courant de secteur et la seconde tension continue partielle (±Ud2;-Ud/2) retombe à la seconde unité de circuit (2) pour générer la partie négative du courant de secteur et **en ce que** la seconde unité de circuit (2) est montée en série avec la première unité de circuit (1).

6. Onduleur selon la revendication 5,
**caractérisé en ce que** les deux tensions continues (±Ud/2) sont de valeur identique et **en ce que** les deux diodes (D1, D2) sont raccordées à la masse.

7. Onduleur selon l'une quelconque des revendications précédentes,
**caractérisé en ce que**, pour la génération d'un courant triphasé, il est prévu au moins trois premières et trois secondes unités de circuit (1,2) qui sont mises en circuit les unes avec les autres.

8. Onduleur selon l'une quelconque des revendications précédentes,
**caractérisé en ce que** les premières et les secondes unités de circuit (1,2) sont montées séparément les unes des autres dans l'espace.

9. Onduleur selon l'une quelconque des revendications précédentes,
**caractérisé en ce que**, pour la génération d'une demi-période d'une oscillation sinusoïdale, à chaque fois un seul commutateur (T1, T2) d'une unité de circuit (1,2) est mis en service et hors service plusieurs fois.

10. Onduleur selon la revendication 9,
**caractérisé en ce que**, pour la génération de la demi-période positive, seule la première unité de circuit (1) et, pour la génération de la demi-période négative, seule la seconde unité de circuit (2) est mise en service et hors service plusieurs fois selon des intervalles de temps définis.

11. Onduleur selon l'une quelconque des revendications précédentes,
**caractérisé en ce que** plusieurs premières et secondes unités de circuit (1,2) sont raccordées les unes aux autres et fournissent le courant d'une seule phase (U, V, W).

12. Convertisseur d'énergie éolienne ou autre usine électrique fournissant du courant électrique continu avec un onduleur selon l'une des revendications précédentes.
